# EUROPÄISCHE PATENTSCHRIFT

(11) **EP 3 884 565 B1**
(45) Veröffentlichungstag und Bekanntmachung des Hinweises auf die Patenterteilung: **24.04.2024**
(21) Anmeldenummer: 19805662.4
(22) Anmeldetag: 18.11.2019
(51) Int. Cl.: H02K 3/22, H02K 9/00, H02K 9/193, H02K 3/50

(54) **ELEKTRISCHE MASCHINE MIT MEHREREN ALS HOHLLEITER AUSGEBILDETEN STARREN WICKLUNGSSTÜCKEN**
ELECTRIC MACHINE HAVING MULTIPLE RIGID WINDING PIECES IN THE FORM OF HOLLOW CONDUCTORS
MACHINE ÉLECTRIQUE POURVUE DE PLUSIEURS ÉLÉMENTS D'ENROULEMENT RIGIDES SOUS LA FORME DE CONDUCTEURS CREUX

(30) Priorität: 20.11.2018 DE 102018129230
(43) Veröffentlichungstag der Anmeldung: 29.09.2021
(73) Patentinhaber: Dynamic E Flow GmbH, 83626 Valley (DE)
(72) Erfinder: NADERER, Michael, 5020 Salzburg (AT); SCHWEINERT, Nikolaus, 87600 Kaufbeuren (DE); HARTONG, Manuel, 87600 Kaufbeuren (DE)
(74) Vertreter: Keilitz Haines & Partner Patentanwälte PartGmbB
(86) Internationale Anmeldenummer: PCT/EP2019/081680
(87) Internationale Veröffentlichungsnummer: WO 2020/104387

(56) Entgegenhaltungen:
- DE-A1-102013 205 418
- DE-A1-102015 012 914
- GB-A- 1 179 553
- JP-A- S5 374 203
- JP-U- S5 131 704
- US-A- 2 833 944
- US-A- 2 929 943
- US-A- 5 875 539

## Beschreibung

Die Erfindung betrifft eine elektrische Maschine mit einem Läufer, einem Stator und mehreren als Hohlleiter ausgebildeten Wicklungsstücken, die verschiedene Spulen einer Wicklung der elektrischen Maschine bilden und jeweils Teil eines Kühlkreislaufs der elektrischen Maschine sind.

### HINTERGRUND DER ERFINDUNG

Aus dem Stand der Technik sind innengekühlte elektrische Maschinen bekannt, deren Wicklung in der sogenannten Pin- oder Hairpin-Technologie hergestellt ist. Pins oder Hairpins sind meist aus Kupfer hergestellte, starre Wicklungsstücke, die in Nuten des Stators der elektrischen Maschine eingesetzt werden und die im Betrieb der elektrischen Maschine ein magnetisches Feld erzeugen. Bei innengekühlten elektrischen Maschinen sind die Wicklungsstücke als Hohlleiter ausgebildet, die einen durchgehenden Kanal umfassen, durch den ein Kühlmittel geleitet wird, um die elektrische Maschine zu kühlen.

Aus dem Stand der Technik bekannte starre Wicklungsstücke haben meist die Form von Haarnadeln oder Stäben. Bekannte Haarnadeln umfassen beispielsweise zwei im Wesentlichen parallel verlaufende Schenkel und einen gekrümmten Übergangsbereich, der die beiden Schenkel miteinander verbindet. An ihrer Außenfläche sind die bekannten Wicklungsstücke in der Regel mit einer elektrisch isolierenden Schicht versehen.

Bei derartigen elektrischen Maschinen mit einer aus starren Wicklungsstücken gebildeten Hohlleiterwicklung stellt insbesondere der hydraulische Anschluss der einzelnen Wicklungsstücke eine technische Herausforderung dar, die ausreichend Raum für Verbesserungen bietet.

Aus der DE 192 525 A ist eine Einrichtung zur Kühlung des umlaufenden Teils elektrischer Maschinen bekannt, die Rohrleitungen mit Öffnungen umfasst, durch die Luft strömt, sobald sich die elektrische Maschine bewegt. Weitere elektrische Maschinen mit einer innengekühlten Wicklung sind aus der DE 10 89 057 A, der DE 30 28 177 A1, der US 2005 / 0 247 762 A1, der GB 1 179 553 A, der DE 10 2015 012 914 A1, der US 2 833 944 A, der JP S53 74203 A, der JP S51 31704 U, der US 2 929 943 A oder der DE 10 2013 205 418 A1 bekannt.

### AUFGABE DER ERFINDUNG

Es ist daher eine Aufgabe der vorliegenden Erfindung, eine elektrische Maschine mit einer aus mehreren starren Wicklungsstücken gebildeten Hohlleiterwicklung zu schaffen, die insbesondere in Bezug auf den hydraulischen Anschluss der einzelnen Wicklungsstücke besonders einfach aufgebaut ist.

Gelöst wird diese Aufgabe gemäß der Erfindung durch die im Patentanspruch 1 genannten Merkmale. Weitere Ausführungsformen der Erfindung ergeben sich aus den Unteransprüchen.

Gemäß der Erfindung wird eine elektrische Maschine vorgeschlagen, die einen Läufer, einen Stator und mehrere als Hohlleiter ausgebildete Wicklungsstücke umfasst, die verschiedene Spulen einer Wicklung der elektrischen Maschine bilden und jeweils Teil eines Kühlkreislaufs der elektrischen Maschine sind. Die einzelnen Wicklungsstücke der elektrischen Maschine haben im Bereich ihrer Endabschnitte jeweils wenigstens eine seitliche, durch ihre Umfangsfläche durchgehende Anzapfung, über die ein Kühlmittel in die Wicklungsstücke eingespeist oder aus dem Wicklungsstücken abgeführt werden kann. Dies hat den Vorteil, dass die einzelnen Endabschnitte der Wicklungsstücke z. B. durch Laserschweißen elektrisch kontaktiert werden können. Laserschweißen ist ein besonders einfaches, schnelles uns kostengünstiges Verfahren, hat jedoch den Nachteil, dass die Wicklungsstücke beim Schweißen beschädigt werden können, so dass sich der in den Wicklungsstücken verlaufende Kanal verschließt und somit eine Durchleitung von Kühlmittel nicht mehr möglich ist. Sofern sich die seitlichen Anzapfungen ausreichend weit weg vom jeweiligen Schweißpunkt befinden, können die Wicklungsstücke ohne Probleme per Laserschweißen befestigt werden. Die Entfernung der Schweißpunkte zu den seitlichen Anzapfungen kann beispielsweise einen oder mehrere Zentimeter betragen.

Die einzelnen Wicklungsstücke sind vorzugsweise an einem Ort, der näher am Ende des Wicklungsstücks liegt als die seitliche Anzapfung, insbesondere durch Laserschweißen, elektrisch kontaktiert.

Die Wicklungsstücke haben jeweils zwei stirnseitige Enden, die vorzugsweise geschlossen sind. Um dies zu realisieren, können die stirnseitigen Enden der Wicklungsstücke z.B. einfach gequetscht sein.

Die erfindungsgemäße elektrische Maschine umfasst ferner ein hydraulisches Anschlussteil, an dem mehrere der Wicklungsstücke hydraulisch angeschlossen sind. Das Anschlussteil hat wenigstens einen Kanal, der mit mehreren der Wicklungsstücke fluidtechnisch in Verbindung steht, so dass ein Kühlmittel über die seitliche Anzapfung in die einzelnen Wicklungsstücke eingespeist oder ein aus den seitlichen Anzapfungen der Wicklungsstücke austretendes Kühlmittel in dem wenigstens einen Kanal gesammelt werden kann.

Der vorstehend genannte Kanal verläuft vorzugsweise im Bereich der seitlichen Anzapfungen und ist mit diesen fluidtechnisch verbunden.

Das hydraulische Anschlussteil hat ferner mehrere Anschlüsse in Form von Öffnungen, die jeweils zur Aufnahme eines einzigen Endabschnitts eines Wicklungsstücks ausgebildet sind. D. h., an jedem Anschluss ist genau ein Endabschnitt eines Wicklungsstücks angeschlossen.

Die Öffnungen verlaufen durch das hydraulische Anschlussteil hindurch, so dass die Endabschnitte der Wicklungsstücke durch das Anschlussteil hindurch gesteckt werden können.

Das hydraulische Anschlussteil ist vorzugsweise aus einem elektrisch isolierenden Material hergestellt. Es ist vorzugsweise ringförmig als ein Anschlussring ausgebildet.

Der Anschlussbereich zwischen den einzelnen Wicklungsstücken und dem hydraulischen Anschlussteil ist vorzugsweise mittels einer Dichtung abgedichtet.

Gemäß einer speziellen Ausführungsform der Erfindung umfasst das hydraulische Anschlussteil Dichtmittelleitungen, die zu den einzelnen Öffnungen führen und so ausgelegt sind, dass ein Dichtmittel zugeführt werden kann, um die Öffnungen abzudichten. Die Dichtmittelleitungen befinden sich vorzugsweise an wenigstens einer in Axialrichtung zeigenden Fläche, in der die Anschlüsse bzw. Öffnungen für die Endabschnitte der Wicklungsstücke vorgesehen sind. Gemäß einer bevorzugten Ausführungsform der Erfindung sind die Dichtmittelleitungen als in der Oberfläche des Anschlussteils verlaufende Kanäle ausgebildet.

Damit das Dichtmittel nicht aus den Dichtmittelleitungen nach außen austritt, ist auf einer oder beiden Seiten des hydraulischen Anschlussteils jeweils eine Abdeckscheibe vorgesehen. Die Abdeckscheibe hat vorzugsweise mit den Anschlussöffnungen des hydraulischen Anschlussteils korrespondierende Durchlässe, so dass die Endabschnitte der Wicklungsstücke hindurch gesteckt werden können. Eine oder beide Abdeckscheiben können dabei ggfs. auch als Kontaktscheibe fungieren, um einzelne Wicklungsstücke elektrisch in Serie zu schalten.

Das hydraulische Anschlussteil ist vorzugsweise mehrteilig ausgebildet und umfasst wenigstens zwei Teil-Anschlussteile, wobei der wenigstens eine interne Kanal zwischen den wenigstens zwei aneinander angrenzenden Teil-Anschlussteilen ausgebildet ist.

Gemäß einer speziellen Ausführungsform der Erfindung umfasst das hydraulische Anschlussteil mehrere Dichtmittel-Eingänge, die über die genannten Dichtmittelleitungen zu den Öffnungen zum Anschließen der Endabschnitte der Wicklungsstücke führen.

Das erfindungsgemäße hydraulische Anschlussteil umfasst vorzugsweise einen zentralen Kühlmitteleingang, der mit einer ersten Gruppe von Endabschnitten der Wicklungsstücke, und einen zentralen Kühlmittelausgang, der mit einer unterschiedlichen zweiten Gruppe von Endabschnitten der Wicklungsstücke fluidtechnisch in Verbindung steht.

Der genannte Kühlmitteleingang kommuniziert vorzugsweise mit wenigstens einem ersten Kanal, der dazu vorgesehen ist, Kühlmittel in die seitlichen Anzapfungen mehrerer Endabschnitte von Wicklungsstücken einzuspeisen. Der genannte Kühlmittelausgang kommuniziert dagegen vorzugsweise mit wenigstens einem zweiten Kanal, der dazu vorgesehen ist, das aus den seitlichen Anzapfungen der Endabschnitte mehrerer Wicklungsstücke austretende Kühlmittel zu sammeln.

Bezüglich der Konstruktion der elektrischen Maschine ist anzumerken, dass, ausgehend von der Wicklung der elektrischen Maschine zunächst ein hydraulisches Anschlussteil zum hydraulischen Anschließen von Endabschnitten der Wicklungsstücke vorgesehen ist und danach, in Axialrichtung weiter außenliegend, folgt eine elektrische Kontaktanordnung zum elektrischen Anschließen bestimmter Endabschnitte an die Phasenanschlüsse.

Die Wicklungsstücke der elektrischen Maschine sind vorzugsweise alle hydraulisch parallelgeschaltet.

Das hydraulische Anschlussteil kann beispielsweise aus Kunststoff, aber auch aus Metall hergestellt sein. Zur elektrischen Isolierung der angeschlossenen Wicklungsstücke gegenüber dem hydraulischen Anschlussteil können z. B. elektrische Isolationselemente vorgesehen sein.

Die Endabschnitte der einzelnen Wicklungsstücke sind bei einer erfindungsgemäßen elektrischen Maschine vorzugsweise in mehreren Reihen mit unterschiedlichen Radien angeordnet. Sie enden vorzugsweise etwa auf gleicher axialer Höhe, d.h. in einer axialen Ebene. Die elektrische Maschine lässt sich dadurch besonders einfach zusammenbauen.

Das vorstehend genannte hydraulische Anschlussteil umfasst vorzugsweise mehrere umlaufende Kanäle zum Verteilen oder Sammeln von Kühlmittel in bzw. aus den einzelnen Wicklungsstücken. Wenigstens einer dieser Kanäle ist vorzugsweise derart ausgebildet, dass er mit wenigstens zwei Reihen der Endabschnitte der Wicklungsstücke fluidtechnisch kommuniziert.

Eine erfindungsgemäße elektrische Maschine umfasst vorzugsweise auch mehrere Kontaktringe, die dazu ausgelegt sind, jeweils mehrere der Wicklungsstücke mit einem der externen Phasenanschlüsse elektrisch zu verbinden. Mit Hilfe der vorstehend genannten Kontaktringe ist es besonders einfach möglich, die betreffenden Anschlüsse der Spulen bzw. Wicklungsstücke zu kontaktieren und mit dem jeweils zugehörigen externen Phasenanschluss zu verbinden. Dies ist insbesondere bei solchen elektrischen Maschinen von Vorteil, die pro Phase (U, V, W) mehrere parallel geschaltete Spulen aufweisen, d. h. bei denen jeder elektrischen Phase bzw. jedem externen Phasenanschluss mehrere parallel geschaltete Spulen zugeordnet sind.

Gemäß einer bevorzugten Ausführungsform der Erfindung umfasst ein Kontaktring mehrere Anschlüsse zum elektrischen Kontaktieren von Wicklungsstücken, wobei diese Anschlüsse über den Umfang des Kontaktrings vorzugsweise gleichmäßig verteilt sind.

Gemäß einer bevorzugten Ausführungsform der Erfindung umfasst die elektrische Maschine auch einen Satz aus mehreren Verteilerelementen, von denen jeweils eines mit einem der zugehörigen externen Phasenanschlüsse elektrisch in Verbindung steht. Die Verteilerelemente sind vorzugsweise ringförmig als Verteilerringe ausgeführt.

Jedes der Verteilerelemente ist vorzugsweise über mehrere elektrische Verbindungselemente mit einem der zuvor genannten Kontaktringe elektrisch verbunden. Eine solche elektrische Maschine umfasst in diesem Fall: einen Satz Verteilerelemente, die den über die externen Phasenanschlüssen fließenden Strom jeweils auf mehrere elektrische Verbindungselemente verteilen, die genannten elektrischen Verbindungselemente, welche die Verteilerelemente und die Kontaktringe elektrisch verbinden, und die genannten Kontaktringe, die jeweils eine vorgegebene Anzahl von parallel geschalteten Spulen kontaktieren. Ausgehend von den externen Phasenanschlüssen (L1, L2, L3) führt der Strompfad in diesem Fall über jeweils ein Verteilerelement, mehrere elektrische Verbindungselemente und jeweils einen der Kontaktringe zu den Spulen der Wicklung und dann weiter zu einem Referenzpotential (z. B. dem Nullpunkt oder einer anderen Phase).

Die genannten elektrischen Verbindungselemente können beispielsweise als stabförmige Elemente ausgebildet sind. Die Verbindungselemente verlaufen vorzugsweise etwa in Axialrichtung der elektrischen Maschine. Sie sind außerdem vorzugsweise gleichmäßig über den Umfang der elektrischen Maschine verteilt angeordnet.

Die einzelnen Verteilerelemente haben vorzugsweise unterschiedliche Durchmesser, wodurch die Konstruktion der elektrischen Beschaltung vereinfacht wird.

Die Kontakt- und/oder Verteilerelemente sind vorzugsweise in Axialrichtung der elektrischen Maschine nebeneinander angeordnet.

Ein als Hohlleiter ausgebildetes Wicklungsstück kann gemäß der Erfindung beispielsweise die Form eines Stabes aufweisen. Gemäß einer anderen Ausführungsform der Erfindung hat ein Wicklungsstück die Form einer Haarnadel, wobei das Wicklungsstück zwei Schenkel und einen gekrümmten Übergangsbereich umfasst, der die beiden Schenkel miteinander verbindet. Die beiden Schenkel sind im Wesentlichen parallel angeordnet und haben vorzugsweise jeweils ein Profil, das an den Querschnitt der zugehörigen Nut im Stator angepasst ist. Ein erfindungsgemäßes Wicklungsstück kann prinzipiell so dimensioniert sein, dass es eine Nut alleine oder zusammen mit einem oder mehreren weiteren Wicklungsstücken ausfüllt.

Ein erfindungsgemäßes Wicklungsstück ist vorzugsweise aus Kupfer, Aluminium oder einer Legierung eines der genannten Materialien hergestellt. An seiner Außenfläche ist vorzugsweise eine elektrisch isolierende Schicht vorgesehen.

Die einzelnen Spulen der Wicklung sind vorzugsweise aus mehreren starren Wicklungsstücken gebildet, die elektrisch in Serie geschaltet sind.

Die vorstehend genannten Verteilerelemente, die Kontaktringe als auch die zwischen den Verteilerelementen und den Kontaktringen angeordneten elektrischen Verbindungselemente müssen gegebenenfalls sehr hohe Stromdichten führen. Um die Kühlung der genannten Bauelemente zu verbessern, ist es gemäß einer speziellen Ausführungsform der Erfindung vorgesehen, neben der Wicklung auch die Verteilerelemente und/oder die Kontaktringe und/oder die Verbindungselemente als Hohlleiter auszubilden, so dass ein Kühlmittel durch die genannten Bauelemente geleitet werden kann. Die Verteilerelemente, die Kontaktringe und/oder die Verbindungselemente bilden damit selbst einen Teil des Kühlkreislaufs der elektrischen Maschine, wodurch diese besonders effektiv gekühlt werden kann.

Alternativ zur vorstehend beschriebenen Innenkühlung können die genannten Bauelemente auch von außen gekühlt werden. So können die Bauelemente beispielsweise in einer oder mehreren Kammern angeordnet sein, durch die ein Kühlmittel geleitet wird.

Grundsätzlich kann jedes thermisch stark beanspruchte Bauelement durch eine entsprechende Führung bzw. Auslegung des Kühlmittelpfades gekühlt werden. Bei einer Konstruktion als Hohlleiter können die einzelnen Bauelemente von innen gekühlt werden. Alternativ kann das Kühlmittel auch außen vorbei geleitet werden, um das betreffende Bauelement zu kühlen. Die Art und Weise der Kühlung ergibt sich aus den technischen Anforderungen und kann vom Fachmann durch praktische Überlegungen einfach umgesetzt werden.

Gemäß einer bevorzugten Ausführungsform der Erfindung haben die Kontaktringe jeweils mehrere Arme, an denen jeweils wenigstens eines der Wicklungsstücke elektrisch kontaktiert wird.

Die eingangs genannten Kontaktringe können, wie erwähnt, aus massivem Metall hergestellt sein. Gemäß einer anderen Ausführungsform der Erfindung sind die Kontaktringe aus einem Leiterplattenmaterial hergestellt, das Leiterbahnen umfasst, die einzelne Wicklungsstücke elektrisch kontaktieren.

Dieselben oder ggf. auch andere Leiterplatten können außerdem dazu vorgesehen sein, mehrere Wicklungsstücke elektrisch in Serie schalten, um die Spulen der elektrischen Wicklung zu bilden.

Eine erfindungsgemäße elektrische Maschine kann auch wenigstens eine Kontaktscheibe haben, die mehrere Durchgangsöffnungen aufweist, durch die die einzelnen Wicklungsstücke hindurch gesteckt sind, wobei die Kontaktscheibe ferner elektrische Verbinder umfasst, über die bestimmte Wicklungsstücke elektrisch in Serie geschaltet werden, um die Spulen der elektrischen Wicklung zu bilden. Die Kontaktscheibe kann beispielsweise als Leiterplatte ausgebildet sein.

Der elektrische und hydraulische Anschluss der einzelnen Wicklungsstücke erfolgt vorzugsweise nur auf einer Seite der elektrischen Maschine. Im Falle von stabförmigen Wicklungsstücken kann der elektrische und/oder hydraulische Anschluss der einzelnen Wicklungsstücke aber auch auf zwei Seiten der elektrischen Maschine bzw. der Wicklung erfolgen.

Gemäß einer bevorzugten Ausführungsform der Erfindung sind die Endabschnitte der einzelnen Wicklungsstücke vorzugsweise in mehreren, insbesondere kreisförmigen, Reihen angeordnet. Die Endabschnitte sind dabei vorzugsweise parallel angeordnet und zeigen vorzugsweise alle in Axialrichtung der elektrischen Maschine. Die Endabschnitte enden vorzugsweise etwa auf gleicher axialer Höhe, d.h. etwa in derselben Ebene. Dadurch wird der elektrische und hydraulische Anschluss der Wicklungsstücke wesentlich vereinfacht.

### KURZE BESCHREIBUNG DER ZEICHNUNGEN

Die Erfindung wird nachstehend anhand der beigefügten Zeichnung beispielhaft näher erläutert. Es zeigen:
Fig. 1 eine Schnittansicht einer elektrischen Maschine mit einem hydraulischen Anschlussteil;
Fig. 2 eine perspektivische Ansicht eines Wicklungsstücks einer elektrischen Maschine in Form einer Haarnadel;
Fig. 3a, 3b verschiedene Ansichten einer Anordnung aus mehreren Verteilerelementen zum Aufteilen des an den externen Phasenanschlüssen eingespeisten Stroms;
Fig. 4a bis 4c Kontaktringe der einzelnen Phasen einer erfindungsgemäßen elektrischen Maschine;
Fig. 5 eine zusammengesetzte Kontaktring-Anordnung der Kontaktringe der Fig. 4a - 4c;
Fig. 6 eine vergrößerte Schnittansicht eines hydraulischen Anschlussteils mit hindurch gesteckten Wicklungsstücken;
Fig. 7 eine perspektivische Ansicht des hydraulischen Anschlussteils mit zwei darauf angeordneten Abdeckscheiben und einer Kontaktscheibe;
Fig. 8a, 8b verschiedene perspektivische Ansichten des hydraulischen Anschlussteils von Fig. 7;
Fig. 9a, 9b die beiden Teilringe des in den Fig. 8a, 8b gezeigten hydraulischen Anschlussteils;
Fig. 10a, 10b perspektivische Ansichten des in den Fig. 8a, 8b dargestellten hydraulischen Anschlussteils mit darauf angeordneten Abdeckscheiben; und
Fig. 11a, 11b perspektivische Ansichten der Anordnung von Fig. 10a, 10b mit einer zusätzlichen elektrischen Kontaktscheibe.

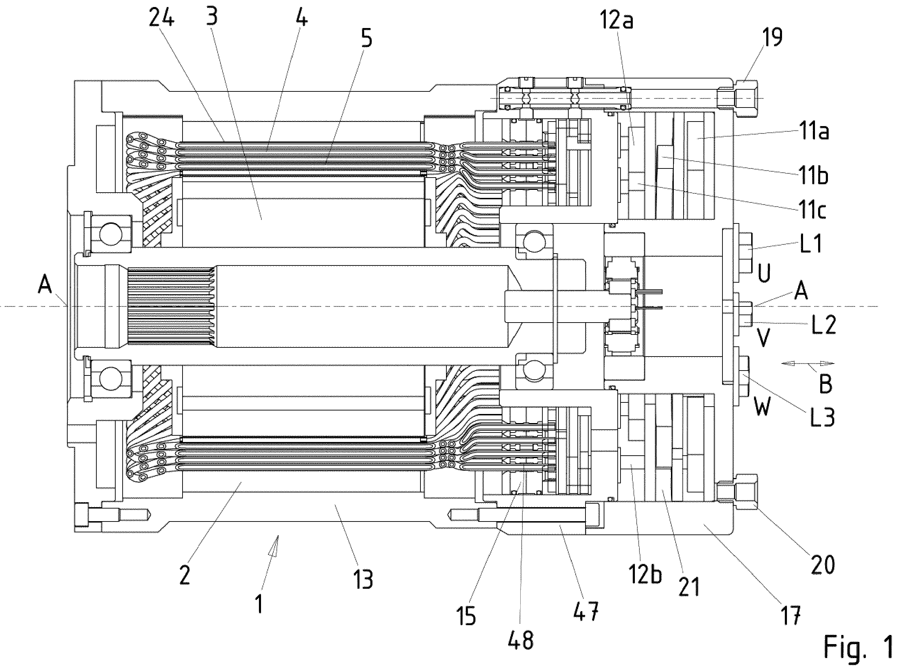

Fig. 1 zeigt eine Schnittansicht einer elektrischen Maschine 1 mit einem Stator 2, einem Läufer 3 und einer aus mehreren starren Wicklungsstücken 5 gebildeten Wicklung 4. Die starren Wicklungsstücke 5 sind dabei als Hohlleiter ausgebildet und umfassen einen durchgehenden Kanal 9, durch den ein Kühlmittel geleitet wird, um die elektrische Maschine 1 zu kühlen. Die einzelnen Wicklungsstücke 5 sind dabei hydraulisch parallelgeschaltet und jeweils Teil eines Kühlkreislaufs der elektrischen Maschine 1.

Im Ausführungsbeispiel von Fig. 1 sind die Wicklungsstücke 5 jeweils einzeln in Nuten 24 des Stators 2 der elektrischen Maschine 1 angeordnet. Der Querschnitt der Wicklungsstücke 5 ist dabei an den Querschnitt der Nuten 24 angepasst, so dass sie im Wesentlichen spielfrei in den Nuten 24 aufgenommen werden. Alternativ könnte aber auch mehr als ein Wicklungsstück 5 pro Nut 24 vorgesehen sein.

Als Kühlmittel kann beispielsweise ein Öl, Therminol, Galden oder Kohlstoffdioxid verwendet werden.

Die elektrische Maschine 1 umfasst ferner ein Gehäuse 13 mit einem Gehäusedeckel 17, in dem sämtliche Komponenten der elektrischen und hydraulischen Anschlussanordnung untergebracht sind.

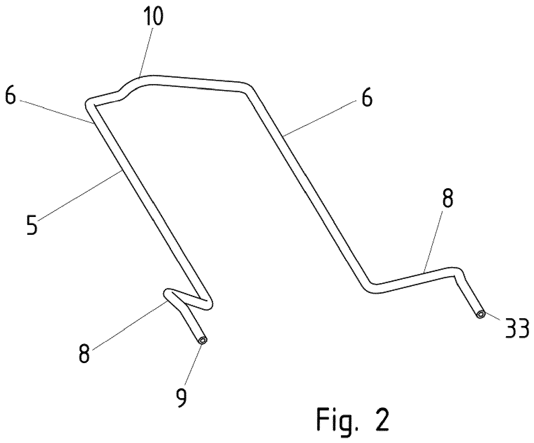

Bei der in Fig. 1 dargestellten elektrischen Maschine 1 sind die Wicklungsstücke 5 als sogenannte Hairpins ausgeführt, wie sie beispielshaft in Fig. 2 dargestellt sind. Das in Fig. 2 gezeigte Wicklungsstück 5 umfasst zwei im Wesentlichen parallel verlaufende Schenkel 6 und einen gekrümmten Übergangsbereich 10, der die beiden Schenkel 6 miteinander verbindet. Das dargestellte Hairpin ist als Hohlleiter ausgebildet und umfasst einen durchgehenden Kanal 9, der von einem Endabschnitt 8 zum anderen Endabschnitt 8 durchgeht und durch den ein Kühlmittel geleitet wird, um die Wicklung 4 der elektrischen Maschine 1 im Betrieb zu kühlen. Das Hairpin ist an seinen stirnseitigen Enden 33 jeweils offen. Eines der stirnseitigen Enden 33 kann somit als Kühlmitteleinlass und das andere stirnseitige Ende 33 als Kühlmittelauslass verwendet werden.

Das in Fig. 2 dargestellte Wicklungsstück 5 kann beispielsweise aus Kupfer hergestellt sein. An seiner Außenfläche ist es vorzugsweise mit einer elektrisch isolierenden Schicht versehen.

Der Wicklungsstück 5 kann z. B. ein rundes oder eckiges Profil aufweisen. Das Wicklungsstück 5 kann auch an verschiedenen Abschnitten ein unterschiedliches Profil aufweisen. Gemäß einer bevorzugten Ausführungsform ist das Profil an den Endabschnitten rund.

Die in Fig. 1 dargestellte elektrische Maschine 1 ist hier dreiphasig ausgeführt und hat entsprechend drei externe Phasenanschlüsse L1, L2 und L3, an denen die elektrischen Phasen U, V und W anliegen. Die Wicklung 4 der elektrischen Maschine 1 ist hier so ausgeführt, dass sie für jede elektrische Phase U, V und W jeweils mehrere parallel geschaltete Spulen umfasst. Die einzelnen Wicklungsstücke 5 sind entsprechend so elektrisch verschaltet, dass jeweils mehrere Wicklungsstücke seriell zu einer Spule verschaltet sind, und mehrere solcher Spulen, die derselben elektrischen Phase U, V, W angehören, parallelgeschaltet sind. Gemäß einer speziellen Ausführungsform der Erfindung kann jede Phase U, V, W beispielsweise acht parallele Spulen umfassen. Die Wicklung 4 der elektrischen Maschine kann natürlich auch mehr oder weniger parallel geschaltete Spulen aufweisen.

Die Endabschnitte 8 derjenigen Wicklungsstücke 5, die am Phasenpotential U, V, W liegen, sind über eine elektrische Kontaktanordnung, auf die im Folgenden noch näher eingegangenen werden wird, mit dem jeweils zugehörigen externen Phasenanschluss L1, L2 oder L3 verbunden.

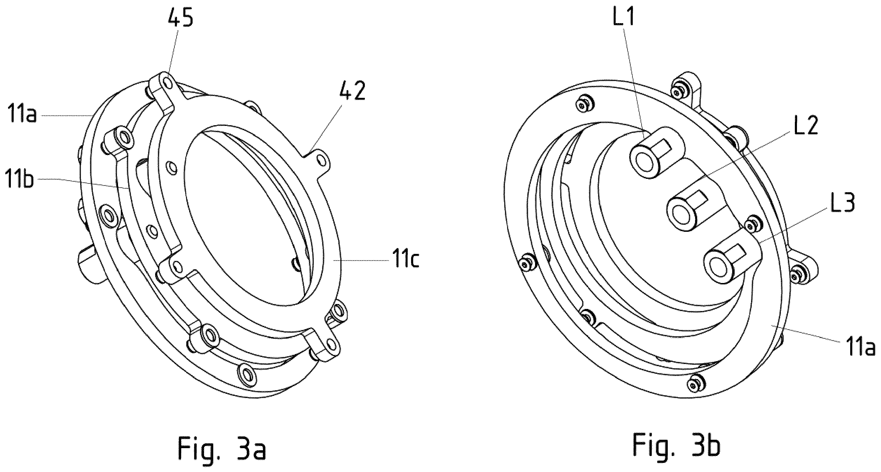

Die genannte elektrische Kontaktanordnung umfasst bei dieser Ausführungsform einen Satz aus drei Verteilerelementen 11a, 11b, 11c, wie er beispielhaft in den Figuren 3a, 3b dargestellt ist. Jedes der Verteilerelemente 11a, 11b, 11c ist an einem der externen Phasenanschlüsse L1, L2, L3 elektrisch angeschlossen. Im dargestellten Ausführungsbeispiel ist das Verteilerelement 11a mit dem Phasenanschluss L1, das Verteilerelement 11b mit dem Phasenanschluss L2 und das Verteilerelement 11c mit dem Phasenanschluss L3 elektrisch verbunden. Die drei Verteilerelemente 11a bis 11c sind in Axialrichtung B der elektrischen Maschine 1 nebeneinander angeordnet und elektrisch voneinander isoliert.

Jedes Verteilerelement 11a, 11b, 11c umfasst ferner mehrere Aufnahmen 45 für elektrische Verbindungselemente 12a - 12d, die über den Umfang des Verteilerelements vorzugsweise gleichmäßig verteilt angeordnet sind. Die einzelnen Verteilerelemente 11a, 11b, 11c dienen im Wesentlichen dazu, den an den Phasenanschlüssen L1, L2, L3 zugeführten Strom über den Umfang der elektrischen Maschine 1 zu verteilen und zu den nachfolgenden Kontaktringen 18a - 18d zu leiten. Jedes der Verteilerelemente 11a - 11d ist über mehrere elektrische Verbindungselemente 12a - 12d mit jeweils einem Kontaktring 18a - 18d elektrisch verbunden.

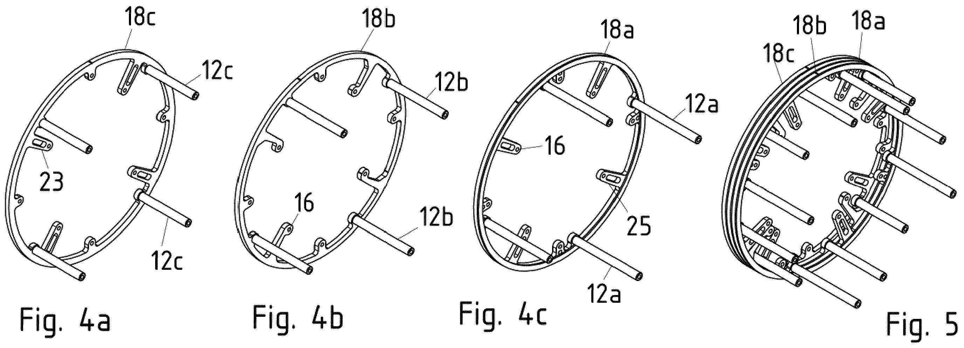

Die Figuren 4a - 4c zeigen verschiedene Kontaktringe 18a - 18c gemäß einer speziellen Ausführungsform der Erfindung. Der Kontaktring 18a ist dabei mit dem zugehörigen Verteilerelement 11a und dem Phasenanschluss L1, der Kontaktring 18b mit dem zugehörigen Verteilerelement 11b und dem Phasenanschluss L2 und der Kontaktring 18c mit dem zugehörigen Verteilring 11c und dem Phasenanschluss L3 elektrisch verbunden.

Wie in den Figuren 4a - 4c zu erkennen ist, sind die elektrischen Verbindungselemente 12a - 12c jeweils an den zugehörigen Kontaktringen 18a - 18c befestigt und über den Umfang der Kontaktringe 18a - 18c gleichmäßig verteilt. Im montierten Zustand liegen die Kontaktringe 18a - 18c im Wesentlichen quer zur Axialrichtung B der elektrischen Maschine 1, und die elektrischen Verbindungselemente 12a - 12c verlaufen im Wesentlichen in Axialrichtung B.

Jeder der elektrischen Kontaktringe 18a - 18c umfasst mehrere Arme 23 zum elektrischen Kontaktieren von Endabschnitten 8 derjenigen Entwicklungsstücke 5, die an einer bestimmten elektrischen Phase U, V oder W liegen. Im vorliegenden Ausführungsbeispiel umfasst jeder Kontaktring 18a - 18c acht Arme 23, um damit jeweils eines von acht Wicklungsstücken 5 von acht parallel geschalteten Spulen zu kontaktieren. Die Arme 23 haben eine unterschiedliche Länge, um radial weiter innenliegende oder weiter außenliegende Endabschnitte 8 der Wicklungsstücke 5 zu kontaktieren. Jeder Arm 23 umfasst eine Kontaktöffnung 16, durch die der Endabschnitt 8 eines Wicklungsstücks 5 hindurch gesteckt und festgelötet ist.

Bei einer elektrischen Maschine 1 gemäß der Erfindung sind die Endabschnitte 8 der einzelnen Wicklungsstücke 5 vorzugsweise in mehreren, insbesondere kreisförmigen, Reihen angeordnet. Die Endabschnitte 8 der Wicklungsstücke 5 sind vorzugsweise parallel nebeneinander angeordnet und zeigen vorzugsweise alle in Axialrichtung B. Die Endabschnitte 8 enden vorzugsweise alle auf gleicher axialer Höhe, d.h. etwa in derselben Ebene. Dies erleichtert die elektrische Kontaktierung der einzelnen Wicklungsstücke 5 sowie deren hydraulische Anbindung an den Kühlkreislauf.

Fig. 5 zeigt die Kontaktringe 18a - 18c der Fig. 4a - 4c in einem zusammengebauten Zustand. Wie zu erkennen ist, sind die einzelnen Kontaktringe 18a - 18c in Axialrichtung B der elektrischen Maschine 1 nebeneinander angeordnet und dabei elektrisch voneinander isoliert.

Neben dem elektrischen Anschluss einzelner Wicklungsstücke 5 an den jeweils zugehörigen externen Phasenanschluss L1, L2, L3 ist es auch erforderlich, bestimmte Wicklungsstücke 5 miteinander in Serie zu verschalten, um die Spulen der Wicklung 4 der elektrischen Maschine 1 zu bilden. Zum Zwecke der seriellen Verschaltung können beispielsweise einfache elektrische Leiter verwendet werden, die zwischen die gewünschten Wicklungsstücke gelötet werden.

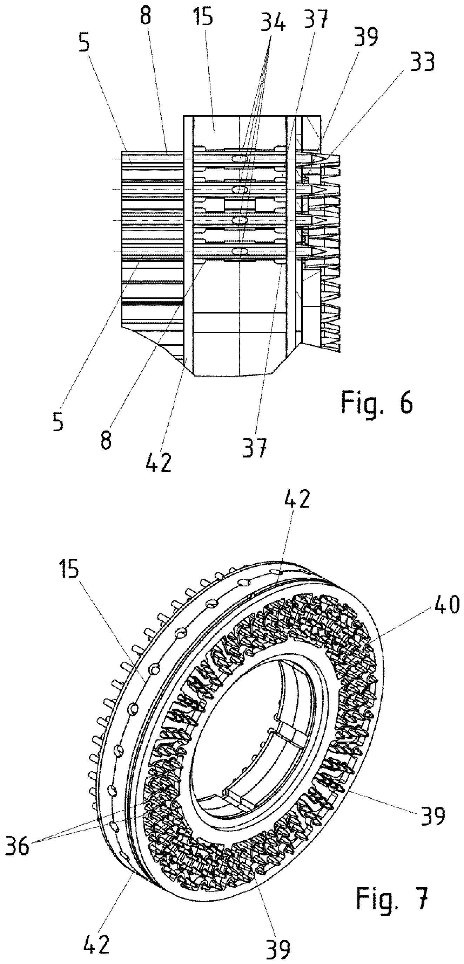

Gemäß einer bevorzugten Ausführungsform der Erfindung ist jedoch eine elektrische Kontaktscheibe 39 mit elektrischen Verbindern 40 vorgesehen, wie sie in Fig. 7 dargestellt ist. Bevor auf diese Kontaktscheibe 39 Bezug genommen wird, wird im Folgenden zunächst noch auf den hydraulischen Anschluss der einzelnen Wicklungsstücke 5 eingegangen:
Wie sie in Fig. 6 gezeigt ist, haben die Endabschnitte 8 der einzelnen Wicklungsstücke 5 jeweils eine seitliche Anzapfung 34, die durch den Umfang hindurch geht und über die Kühlmittel in die Wicklungsstücke eingespeist bzw. aus denen das Kühlmittel austreten kann. Dies hat den Vorteil, dass die einzelnen Endabschnitte 8 der Wicklungsstücke 5 durch Laserschweißen elektrisch kontaktiert werden können. Laserschweißen ist ein besonders einfaches, schnelles uns kostengünstiges Verfahren, hat jedoch den Nachteil, dass die Wicklungsstücke 5 beim Schweißen beschädigt werden können, so dass sich der in den Wicklungsstücken 5 verlaufende Kanal 9 verschließt und somit eine Leitung von Kühlmittel nicht mehr möglich ist. Sofern sich die seitlichen Anzapfungen 34 ausreichend weit weg vom jeweiligen Schweißpunkt befinden, können die Wicklungsstücke 5 ohne Probleme per Laserschweißen befestigt werden. Die Entfernung zwischen den Schweißpunkten und den seitlichen Anzapfungen 34 kann beispielsweise einen oder mehrere Zentimeter betragen.

Die seitlichen Anzapfungen 34 können z. B. durch Bohren oder schleifen hergestellt werden.

Die einzelnen Endabschnitte 8 sind parallel angeordnet und verlaufen jeweils durch ein hydraulisches Anschlussteil 15, das mehrere innenliegende Kanäle 31, 32 umfasst, mittels derer das Kühlmittel über die seitlichen Anzapfungen 34 in die einzelnen Wicklungsstücke 5 eingespeist oder aus den Wicklungsstücken 5 austretendes Kühlmittel gesammelt wird. Die einzelnen Endabschnitte 8 sind dabei so angeordnet, dass die seitlichen Anzapfungen 34 im Wesentlichen in derselben Ebene im Bereich eines Kanals 31, 32 liegen und mit diesem kommunizieren.

Wie in Fig. 6 zu erkennen ist, sind die stirnseitigen Enden 33 der einzelnen Wicklungsstücke 5 geschlossen. Um dies zu erreichen, können die stirnseitigen Enden 33 der Wicklungsstücke 35 beispielsweise einfach gequetscht werden.

Auf den beiden in Axialrichtung B zeigenden Außenflächen des hydraulischen Anschlussteils 15 ist jeweils eine Abdeckscheibe 42 angeordnet, auf die im Folgenden noch näher eingegangen werden wird. Auf der in Fig. 6 rechts dargestellten Seite des hydraulischen Anschlussteils 15 ist ferner eine Kontaktscheibe 39 angeordnet, die dazu dient, bestimmte Endabschnitte 8 der Wicklungsstücke 5 zu kontaktieren und entsprechend der elektrischen Verschaltung der Wicklung 4 in Serie zu schalten.

Fig. 7 zeigt eine perspektivische Ansicht des hydraulischen Anschlussteils 15 mit beidseitig angeordneten Abdeckscheiben 42 und der vorstehend beschriebenen Kontaktscheibe 39. Das hydraulische Anschlussteil 15, die beiden Abdeckscheiben 42 sowie die Kontaktscheibe 39 haben jeweils eine Vielzahl von Durchgangsöffnungen 36, durch welche die Endabschnitte 8 der einzelnen Wicklungsstücke 5 hindurch verlaufen. Wie zu erkennen ist, ragen die Endabschnitte 8 der Wicklungsstücke 5 durch die gesamte Anordnung hindurch und stehen über die Kontaktscheibe 39 nach außen vor. An der äußeren, in Axialrichtung B zeigenden Oberfläche der Kontaktscheibe 39 ist eine Vielzahl elektrischer Verbinder 40 vorgesehen, über die bestimmte Wicklungsstücke 5 in Serie geschaltet sind. Die Endabschnitte 8 der Wicklungsstücke 5 werden dort vorzugsweise elektrisch verschweißt. Eine solche Kontaktscheibe 39 kann auch bei jeder anderen Ausführungsform der elektrischen Maschine 1 vorgesehen sein.

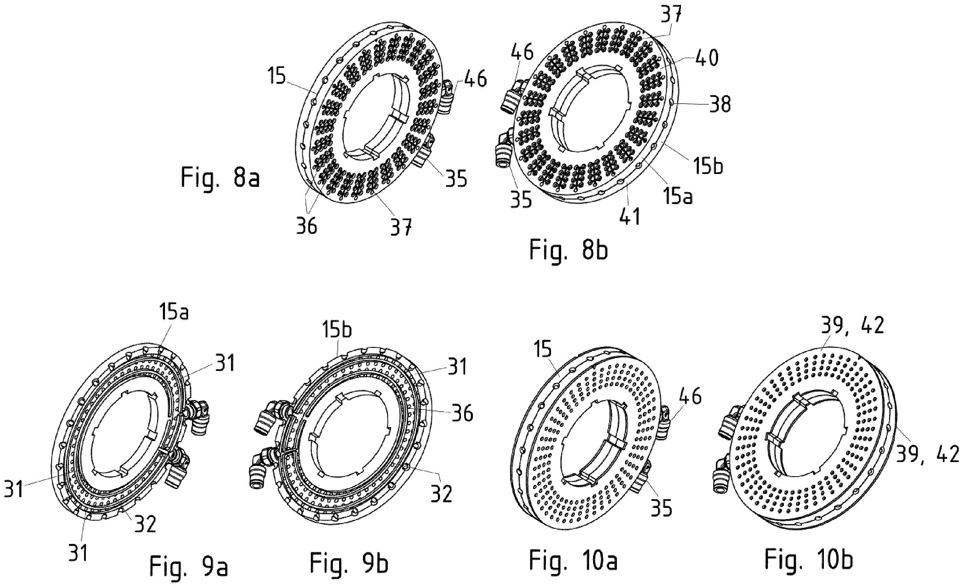

Die Fig. 8a und 8b zeigen verschiedene perspektivische Ansichten des hydraulischen Anschlussteils 15 von Fig. 7. Das hydraulische Anschlussteil 15 umfasst eine Vielzahl von Durchgangsöffnungen 36, durch die im zusammengebauten Zustand jeweils ein Endabschnitt 8 eines Wicklungsstücks 5 hindurch verläuft. Die Durchgangsöffnungen 36 verlaufen im Wesentlichen in Axialrichtung B der elektrischen Maschine 1, wodurch die Endabschnitte 8 der Wicklungsstücke 5 im Wesentlichen parallel angeordnet werden. Am Außenumfang des hydraulischen Anschlussteils 15 ist ferner ein zentraler Kühlmitteleingang 46 und ein zentraler Kühlmittelausgang 35 vorgesehen, über die das Kühlmittel zu- bzw. abgeführt wird.

Im Innenraum des hydraulischen Anschlussteils 15 befinden sich, wie erwähnt, verschiedene Kanäle 31, 32, die mit den seitlichen Anzapfungen 34 der Wicklungsstücke 5 fluidtechnisch kommunizieren und über die das Kühlmittel in die Wicklungsstücke 5 eingespeist bzw. das aus den Wicklungsstücken 5 austretende Kühlmittel gesammelt wird. Die genannten Kanäle 31, 32 sind in den Figuren 9a und 9b genauer dargestellt.

Gemäß einer alternativen Ausführungsform der Erfindung könnten auch nur auf einer Seite des hydraulischen Anschlussteils 15 Öffnungen 36 für die Endabschnitte 8 der Wicklungsstücke 5 vorgesehen sein. Die Endabschnitte 8 der Wicklungsstücke 5 würden in diesem Fall im Innenraum des hydraulischen Anschlussteils 5 enden. Der hydraulische Anschluss der Wicklungsstücke 5 könnte dennoch wie vorstehend beschrieben realisiert sein.

An beiden in Axialrichtung B zeigenden Flächen des hydraulischen Anschlussteils 15 sind ferner Dichtmittelleitungen 37 bzw. -kanäle vorgesehen, über die ein Dichtmittel zu den einzelnen Durchgangsöffnungen 36 geleitet werden kann. Das Dichtmittel dient in diesem Fall dazu, das hydraulische Anschlussteil 15 nach außen hin abzudichten.

An der seitlichen Umfangsfläche des hydraulischen Anschlussteils 15 befinden sich mehrere Dichtmitteleingänge 38, über die das Dichtmittel in die Dichtmittelleitungen 37 bzw. -kanäle eingespritzt werden kann. Die Dichtmitteleingänge 36 kommunizieren mit den zuvor genannten Dichtmittelleitungen 37, so dass das Dichtmittel, wenn es über die Dichtmitteleingänge 36 in das hydraulische Anschlussteil 15 eingespritzt wird, über die Dichtmittelleitungen 37 zu den einzelnen Durchgangsöffnungen 36 für die Wicklungsstücke 5 fließt.

Die Dichtmittelleitungen 37 sind bei dieser Ausführungsform als in der Oberfläche des hydraulischen Anschlussteils 15 vorgesehene Kanäle bzw. Nuten ausgebildet. Damit das Dichtmittel nicht aus den Dichtmittelleitungen 37 nach außen austritt, ist auf beiden Seiten des hydraulischen Anschlussteils 15 jeweils eine Abdeckscheibe 42 vorgesehen. Eine oder beide der Abdeckscheiben 42 können dabei ggfs. auch als Kontaktscheibe 39 fungieren, um einzelne Wicklungsstücke 5 elektrisch in Serie zu schalten.

Wie in den Fig. 9a, 9b zu sehen ist, ist das hydraulische Anschlussteil 15 bei diesem Ausführungsbeispiel als ein mehrteiliges Element ausgeführt, das zwei Teilringe 15a, 15b umfasst, an deren gegenüberliegenden Seiten jeweils Fluidkanäle 31, 32 vorgesehen sind, über die das Kühlmittel zu- bzw. abgeführt wird. Der mittlere Kanal 32 ist dabei breiter ausgebildet als der radial außen bzw. radial innen liegende Kanäle 31 und überspannt entsprechend zwei nebeneinander liegende Reihen von Endabschnitten 8 der elektrischen Wicklungsstücke 5. Die beiden anderen Kanäle 31 kommunizieren dagegen nur mit jeweils einer Reihe von Endabschnitten 8. Das Kühlmittel wird bei diesem Ausführungsbeispiel vorzugsweise über den mittleren Kanal 32 zugeführt und über die beiden anderen Kanäle 31 abgeführt. Die Flussrichtung kann aber jederzeit auch geändert werden.

Die Fig. 10a und 10b zeigen jeweils das zusammengesetzte hydraulische Anschlussteil 15 mit beidseitig angeordneten Abdeckscheiben 42. Zu erkennen sind außerdem der zentrale Kühlmitteleingang 46 und -ausgang 35.

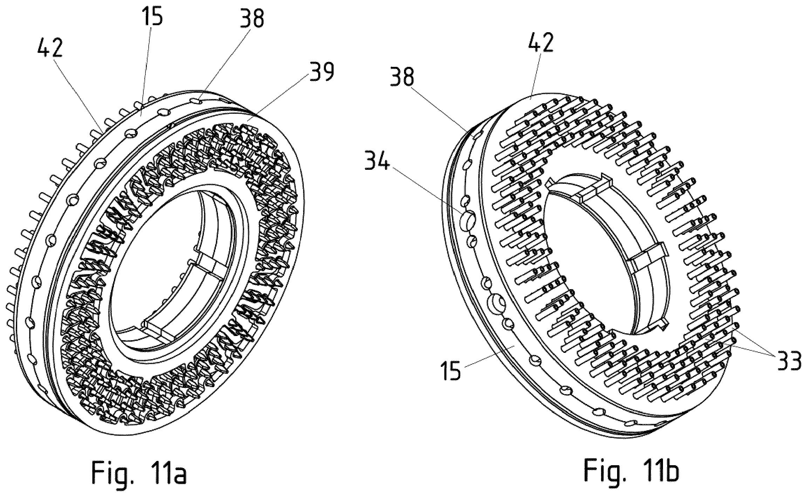

Die Fig. 11a und 11b zeigen schließlich noch die gesamte Anordnung von Fig. 10a und 10b mit einer zusätzlich aufgesetzten Kontaktscheibe 39 sowie einer Vielzahl von Endabschnitten 8 der Wicklungsstücke 5.

In dem in Fig. 1 dargestellten Ausführungsbeispiel der elektrischen Maschine 1 fließt das Kühlmittel über einen am Gehäuse 13 der elektrischen Maschine 1 vorgesehenen Kühlmitteleingang 19 in die elektrische Maschine 1 hinein und wird von dort über einen oder mehrere Kanäle dem hydraulischen Anschlussteil 15 zugeführt. Das Kühlmittel tritt dort von außen über den Kühlmitteleingang 46 in den mittleren Kühlmittelkanal 32 ein und wird dann in die damit fluidtechnisch verbundenen Endabschnitte 8 der Wicklungsstücke 5 über die seitlichen Anzapfungen 34 eingespeist, läuft durch die einzelnen Wicklungsstücke 5 hindurch und tritt an den beiden Kanälen 31 wieder aus. Von dort wird das Kühlmittel in eine Kammer 21 geleitet, in der sich die Verteilerelemente 11a - 11c befinden. Das Kühlmittel tritt schließlich am Kühlmittelausgang 20 wieder aus der elektrischen Maschine 1 aus.

Des Weiteren kann auch eine Leistungselektronik der elektrischen Maschine 1 (nicht gezeigt) in den Kühlkreislauf eingebunden sein und durch das Kühlmittel gekühlt werden. Durch entsprechende Auslegung des Kühlmittelpfades durch die elektrische Maschine 1 können im Prinzip beliebige Komponenten, sofern gewünscht, gekühlt werden. Der Fachmann wird den Kühlmittelpfad gemäß den Anforderungen im Rahmen seines Fachwissens entsprechend anpassen.

## Patentansprüche

1. Elektrische Maschine (1) mit einem Läufer (3), einem Stator (2) und mehreren als Hohlleiter ausgebildeten starren Wicklungsstücken (5), die verschiedene Spulen einer Wicklung (4) der elektrischen Maschine (1) bilden und jeweils Teil eines Kühlkreislaufs der elektrischen Maschine (1) sind, wobei:
- die Wicklungsstücke (5) im Bereich ihrer Endabschnitte (8) jeweils wenigstens eine seitliche, durch ihre Umfangsfläche durchgehende Anzapfung (34) aufweisen, über die ein Kühlmittel in die Wicklungsstücke (5) eingespeist oder aus den Wicklungsstücken (5) abgeführt werden kann;
- ein hydraulisches Anschlussteil (15) vorgesehen ist, an dem mehrere der Wicklungsstücke (15) hydraulisch angeschlossen sind,
- und wobei das Anschlussteil (15) wenigstens einen Kanal (31, 32) aufweist, der mit mehreren der Wicklungsstücke (5) fluidtechnisch in Verbindung steht, so dass das Kühlmittel über die seitliche Anzapfung (34) der Wicklungsstücke (5) in die einzelnen Wicklungsstücke (5) eingespeist, oder ein aus den seitlichen Anzapfungen (34) der Wicklungsstücke (5) austretendes Kühlmittel in dem wenigstens einen Kanal (31, 32) gesammelt werden kann,
**dadurch gekennzeichnet, dass**
das Anschlussteil (15) mehrere Öffnungen (36) aufweist, die jeweils zur Aufnahme eines Endabschnitts (1) eines Wicklungsstücks (5) ausgebildet sind und in einer Axialrichtung (B) der elektrischen Maschine (1) durch das hydraulische Anschlussteil (15) hindurch verlaufen.

2. Elektrische Maschine nach Anspruch 1,
**dadurch gekennzeichnet, dass**
die Wicklungsstücke (5) stirnseitige Enden (33) aufweisen, die geschlossen sind.

3. Elektrische Maschine nach Anspruch 1,
**dadurch gekennzeichnet, dass**
der wenigstens eine Kanal (31, 32) in Axialrichtung B der elektrischen Maschine (1) betrachtet auf Höhe der seitlichen Anzapfungen (34) verläuft

4. Elektrische Maschine nach Anspruch 1,
**dadurch gekennzeichnet, dass**
das hydraulische Anschlussteil (15) aus einem elektrisch isolierenden Material hergestellt ist.

5. Elektrische Maschine nach Anspruch 1,
**dadurch gekennzeichnet, dass**
das hydraulische Anschlussteil (15) an wenigstens einer in Axialrichtung B zeigenden Fläche (40), in der die Öffnungen (36) für die Endabschnitte (8) der Wicklungsstücke (5) vorgesehen sind, Dichtmittelleitungen (37) aufweist, die zu den einzelnen Öffnungen (36) führen und die so ausgelegt sind, dass darüber ein Dichtmittel zugeführt werden kann, um die Öffnungen (36) abzudichten.

6. Elektrische Maschine nach Anspruch 1,
**dadurch gekennzeichnet, dass**
das hydraulische Anschlussteil (15) mehrteilig ausgebildet ist und wenigstens zwei Teil-Anschlussteile (15a, 15b) umfasst, wobei der wenigstens eine interne Kanal (31, 32) zwischen den wenigstens zwei aneinander angrenzenden Teil-Anschlussteilen (15a, 15b) ausgebildet ist.

7. Elektrische Maschine nach Anspruch 1,
**dadurch gekennzeichnet, dass**
das hydraulische Anschlussteil (15) mehrere Dichtmittel-Eingänge (38) umfasst, die über Dichtmittelleitungen (37) zu den Öffnungen (36) für die Endabschnitte (8) der Wicklungsstücke (5) führen.

8. Elektrische Maschine nach Anspruch 1,
**dadurch gekennzeichnet, dass**
das hydraulische Anschlussteil (15) einen zentralen Kühlmitteleingang (34), der mit einer ersten Gruppe von Endabschnitten (8) der Wicklungsstücke (5), und einen zentralen Kühlmittelausgang (35) aufweist, der mit einer unterschiedlichen zweiten Gruppe von Endabschnitten (8) der Wicklungsstücke (5) fluidtechnisch in Verbindung steht.

9. Elektrische Maschine nach Anspruch 8,
**dadurch gekennzeichnet, dass**
der Kühlmitteleingang (34) mit wenigstens einem ersten Kanal (32), der dazu vorgesehen ist, Kühlmittel in die seitlichen Anzapfungen (34) mehrerer Endabschnitte (8) von Wicklungsstücken (5) einzuspeisen, und der Kühlmittelausgang (35) mit wenigstens einem zweiten Kanal (31), der dazu vorgesehen ist, das aus den seitlichen Anzapfungen (34) der Endabschnitte (8) mehrerer Wicklungsstücke (5) austretende Kühlmittel zu sammeln, fluidtechnisch in Verbindung steht.

10. Elektrische Maschine nach einem der vorhergehenden Ansprüche,
**dadurch gekennzeichnet, dass**
in Axialrichtung B der elektrischen Maschine (1) betrachtet, ausgehend von der Wicklung (4) der elektrischen Maschine (1) zunächst das hydraulische Anschlussteil (15) zum hydraulischen Anschließen von Endabschnitten (8) der Wicklungsstücke (5) vorgesehen ist und danach eine elektrische Kontaktanordnung zum elektrischen Verbinden bestimmter Endabschnitte (8) mit Phasenanschlüssen (L1, L2, L3) folgt.

11. Elektrische Maschine nach Anspruch 10,
**dadurch gekennzeichnet, dass**
die elektrische Kontaktanordnung mehrere Kontaktringe (18a - 18d) umfasst.

12. Elektrische Maschine nach Anspruch 1,
**dadurch gekennzeichnet, dass**
auf wenigstens einer in Axialrichtung B der elektrischen Maschine (1) zeigenden Fläche (40) des hydraulischen Anschlussteils (15) eine Abdeckscheibe (42) angeordnet ist.

## Claims

1. Electric machine (1) having a rotor (3), a stator (2) and a plurality of rigid winding pieces (5) in the form of hollow conductors, which form various coils of a winding (4) of the electric machine (1) and are each part of a cooling circuit of the electric machine (1), wherein:
- the winding pieces (5) each have, in the region of their end sections (8), at least one lateral tapping (34) which passes through their circumferential surface and via which a coolant can be fed into the winding pieces (5) or discharged from the winding pieces (5);
- a hydraulic connection part (15) is provided, to which several of the winding pieces (15) are hydraulically connected,
- and wherein the connecting part (15) has at least one channel (31, 32) which is fluidically connected to a plurality of the winding pieces (5), so that the coolant can be fed into the individual winding pieces (5) via the lateral tapping (34) of the winding pieces (5), or a coolant emerging from the lateral tappings (34) of the winding pieces (5) can be collected in the at least one channel (31, 32),
**characterised in that**
the connecting part (15) has a plurality of openings (36) which are each designed to receive an end section (1) of a winding piece (5) and extend through the hydraulic connecting part (15) in an axial direction (B) of the electrical machine (1).

2. Electrical machine according to claim 1,
**characterised in that**
the winding pieces (5) have end faces (33) which are closed.

3. Electrical machine according to claim 1,
**characterised in that**
the at least one channel (31, 32) extends at the level of the lateral tappings (34) when viewed in the axial direction B of the electrical machine (1).

4. Electrical machine according to claim 1,
**characterised in that**
the hydraulic connection part (15) is made of an electrically insulating material.

5. Electrical machine according to claim 1,
**characterised in that**
the hydraulic connection part (15) has, on at least one surface (40) pointing in the axial direction B, in which the openings (36) for the end sections (8) of the winding pieces (5) are provided, sealing agent lines (37) which lead to the individual openings (36) and which are designed in such a way that a sealing agent can be supplied via them in order to seal the openings (36).

6. Electrical machine according to claim 1,
**characterised in that**
the hydraulic connection part (15) is formed in several parts and comprises at least two partial connection parts (15a, 15b), wherein the at least one internal channel (31, 32) is formed between the at least two adjoining partial connection parts (15a, 15b).

7. Electrical machine according to claim 1,
**characterised in that**
the hydraulic connection part (15) comprises a plurality of sealant inlets (38) which lead via sealant lines (37) to the openings (36) for the end sections (8) of the winding pieces (5).

8. Electrical machine according to claim 1,
**characterised in that**
the hydraulic connection part (15) has a central coolant inlet (34), which is in fluid communication with a first group of end sections (8) of the winding pieces (5), and a central coolant outlet (35), which is in fluid communication with a different second group of end sections (8) of the winding pieces (5).

9. Electrical machine according to claim 8,
**characterised in that**
the coolant inlet (34) is in fluid communication with at least one first channel (32), which is intended to feed coolant into the lateral tappings (34) of a plurality of end sections (8) of winding pieces (5), and the coolant outlet (35) is in fluid communication with at least one second channel (31), which is intended to collect the coolant emerging from the lateral tappings (34) of the end sections (8) of a plurality of winding pieces (5).

10. Electrical machine according to one of the preceding claims,
**characterised in that**
viewed in the axial direction B of the electrical machine (1), starting from the winding (4) of the electrical machine (1), first the hydraulic connection part (15) is provided for hydraulically connecting end sections (8) of the winding pieces (5) and then an electrical contact arrangement follows for electrically connecting certain end sections (8) to phase connections (L1, L2, L3).

11. Electrical machine according to claim 10,
**characterised in that**
the electrical contact arrangement comprises a plurality of contact rings (18a - 18d).

12. Electrical machine according to claim 1,
**characterised in that**
a cover disc (42) is arranged on at least one surface (40) of the hydraulic connection part (15) pointing in the axial direction B of the electrical machine (1).

## Revendications

1. Machine électrique (1) comprenant un rotor (3), un stator (2) et plusieurs pièces d'enroulement (5) rigides réalisées sous forme de conducteurs creux, qui forment différentes bobines d'un enroulement (4) de la machine électrique (1) et font chacune partie d'un circuit de refroidissement de la machine électrique (1), dans laquelle:
- les pièces d'enroulement (5) présentent chacune, dans la zone de leurs sections d'extrémité (8), au moins une prise latérale (34) traversant leur surface périphérique, par laquelle un fluide de refroidissement peut être injecté dans les pièces d'enroulement (5) ou évacué des pièces d'enroulement (5);
- une pièce de raccordement hydraulique (15) est prévue, à laquelle plusieurs des pièces d'enroulement (15) sont raccordées hydrauliquement,
- et la pièce de raccordement (15) présentant au moins un canal (31, 32) qui est en liaison fluidique avec plusieurs des pièces d'enroulement (5), de sorte que le fluide de refroidissement peut être alimenté dans les différentes pièces d'enroulement (5) par le biais des prises latérales (34) des pièces d'enroulement (5), ou qu'un fluide de refroidissement sortant des prises latérales (34) des pièces d'enroulement (5) peut être collecté dans le au moins un canal (31, 32),
**caractérisé en ce que**
la pièce de raccordement (15) présente plusieurs ouvertures (36) qui sont réalisées chacune pour recevoir une section d'extrémité (1) d'une pièce de bobinage (5) et qui s'étendent dans une direction axiale (B) de la machine électrique (1) à travers la pièce de raccordement hydraulique (15).

2. Machine électrique selon la revendication 1,
**caractérisé en ce que**
les pièces d'enroulement (5) présentent des extrémités frontales (33) qui sont fermées.

3. Machine électrique selon la revendication 1,
**caractérisé en ce que**
le au moins un canal (31, 32) s'étend, vu dans la direction axiale B de la machine électrique (1), au niveau des prises latérales (34).

4. Machine électrique selon la revendication 1,
**caractérisé en ce que**
la pièce de raccordement hydraulique (15) est fabriquée en un matériau électriquement isolant.

5. Machine électrique selon la revendication 1,
**caractérisé en ce que**
la pièce de raccordement hydraulique (15) présente, sur au moins une surface (40) orientée dans la direction axiale B, dans laquelle sont prévues les ouvertures (36) pour les sections d'extrémité (8) des pièces de bobinage (5), des conduites de produit d'étanchéité (37) qui mènent aux différentes ouvertures (36) et qui sont conçues de telle sorte qu'un produit d'étanchéité peut être amené par-dessus afin de rendre étanches les ouvertures (36).

6. Machine électrique selon la revendication 1,
**caractérisé en ce que**
la pièce de raccordement hydraulique (15) est réalisée en plusieurs parties et comprend au moins deux pièces de raccordement partielles (15a, 15b), l'au moins un canal interne (31, 32) étant réalisé entre les au moins deux pièces de raccordement partielles (15a, 15b) adjacentes.

7. Machine électrique selon la revendication 1,
**caractérisé en ce que**
la pièce de raccordement hydraulique (15) comprend plusieurs entrées de produit d'étanchéité (38) qui mènent, par l'intermédiaire de conduites de produit d'étanchéité (37), aux ouvertures (36) pour les sections d'extrémité (8) des pièces de bobinage (5).

8. Machine électrique selon la revendication 1,
**caractérisé en ce que**
la pièce de raccordement hydraulique (15) présente une entrée centrale de fluide de refroidissement (34) qui est en liaison fluidique avec un premier groupe de sections d'extrémité (8) des pièces de bobinage (5), et une sortie centrale de fluide de refroidissement (35) qui est en liaison fluidique avec un deuxième groupe différent de sections d'extrémité (8) des pièces de bobinage (5).

9. Machine électrique selon la revendication 8,
**caractérisé en ce que**
l'entrée de réfrigérant (34) est en communication fluidique avec au moins un premier canal (32) prévu pour injecter du réfrigérant dans les prises latérales (34) de plusieurs parties d'extrémité (8) de pièces de bobinage (5), et la sortie de réfrigérant (35) est en communication fluidique avec au moins un deuxième canal (31) prévu pour recueillir le réfrigérant sortant des prises latérales (34) des parties d'extrémité (8) de plusieurs pièces de bobinage (5).

10. Machine électrique selon l'une quelconque des revendications précédentes,
**caractérisé en ce que**
vu dans la direction axiale B de la machine électrique (1), en partant de l'enroulement (4) de la machine électrique (1), on prévoit d'abord la pièce de raccordement hydraulique (15) pour le raccordement hydraulique de sections d'extrémité (8) des pièces d'enroulement (5), puis un agencement de contact électrique pour le raccordement électrique de certaines sections d'extrémité (8) à des raccordements de phase (L1, L2, L3).

11. Machine électrique selon la revendication 10,
**caractérisé en ce que**
l'agencement de contact électrique comprend plusieurs anneaux de contact (18a - 18d).

12. Machine électrique selon la revendication 1,
**caractérisé en ce que**
un disque de recouvrement (42) est disposé sur au moins une surface (40) de la pièce de raccordement hydraulique (15) orientée dans la direction axiale B de la machine électrique (1).
